# EUROPÄISCHE PATENTSCHRIFT

(11) **EP 2 073 970 B1**
(45) Veröffentlichungstag und Bekanntmachung des Hinweises auf die Patenterteilung: **15.04.2015**
(21) Anmeldenummer: 07818306.8
(22) Anmeldetag: 21.09.2007
(51) Int. Cl.: B29C 51/42, B65B 47/02

(54) **HEIZPLATTE MIT EINER VIELZAHL VON HEIZPATRONEN**
HEATING PLATE WITH A MULTIPLICITY OF HEATING CARTRIDGES
PLAQUE CHAUFFANTE DOTÉE D'UNE PLURALITÉ DE CARTOUCHES DE CHAUFFAGE

(30) Priorität: 22.09.2006 DE 102006045327
(43) Veröffentlichungstag der Anmeldung: 01.07.2009
(73) Patentinhaber: GEA Food Solutions Germany GmbH, 35216 Biedenkopf-Wallau (DE)
(72) Erfinder: MEYER, Klaus, 35236 Breidenbach (DE)
(74) Vertreter: Wolff, Felix
(86) Internationale Anmeldenummer: PCT/EP2007/008216
(87) Internationale Veröffentlichungsnummer: WO 2008/034624

(56) Entgegenhaltungen:
- EP-A- 0 300 521
- GB-A- 1 405 753
- JP-A- 55 095 519
- JP-A- 60 044 320
- US-A- 5 280 434
- GEISS M: "WARMFORMMASCHINE MIT DIGITALER HEIZUNGSSTEUERUNG" KUNSTSTOFFE, CARL HANSER VERLAG, MUNCHEN, DE, Bd. 81, Nr. 8, 1. August 1991 (1991-08-01), Seiten 675-678, XP000287706 ISSN: 0023-5563

## Beschreibung

Die vorliegende Erfindung betrifft eine Verpackungsmaschine mit einer Formstation, die Mulden in eine Folienbahn einformt, wobei ein Heizelement die Folienbahn vor dem Verformen erwärmt.

Die gattungsgemäßen Verpackungsmaschinen sind aus dem Stand der Technik, bespielsweise der JP 55095519 A, bekannt. Bei diesen Verpackungsmaschinen wird in eine plane Folienbahn eine Mulde durch Tiefziehen eingeformt. Dafür muss die Folienbahn vor dem Tiefziehen mit einem Heizelement erwärmt werden. Beim Tiefziehen wird die Folienbahn unterschiedlich beansprucht. Insbesondere im Bereich von Ecken und im Randbereich wird die Folienbahn wesentlich stärker gedehnt als beispielsweise am Boden der Mulde oder im Bereich der Siegelnaht. Um zu vermeiden, dass die Folie in diesen Bereichen zu dünn wird, werden dickere Folienbahnen verwendet, was sich nachteilig auf die Kosten, den Transport und die Entsorgung der herzustellenden Verpackung auswirkt.

Es war deshalb die Aufgabe der vorliegenden Erfindung, eine Verpackungsmaschine zur Verfügung zu stellen, die die Nachteile des Standes der Technik nicht aufweist.

Gelöst wird die Aufgabe durch eine Verpackungsmaschine nach Anspruch 1.

Gemäß einem weiteren bevorzugten Gegenstand der oben genannten Erfindung weist die Verpackungsmaschine ein Siegelwerkzeug auf, mit dem eine Oberfolie an die Verpackungsmulde gesiegelt wird, wobei das Siegelwerkzeug ein Heizelement zu dessen Erwärmung aufweist, wobei das Heizelement eine Vielzahl von diskreten Heizmitteln aufweist, die einzeln oder gruppenweise ansteuerbar sind.

Erfindungsgemäß weist das Heizelement eine Vielzahl von diskreten Heizmitteln auf, die einzeln oder gruppenweise ansteuerbar sind. Dadurch ist es möglich, ein ganz bestimmtes den jeweiligen Tiefziehanforderungen entsprechendes Temperaturprofil in der Folienbahn zu erzeugen. Beispielsweise sollte die Temperatur in den Eckbereichen der Verpackung geringer sein, so dass keine Schwachstelle in den herzustellenden Verpackungsmulden entstehen. In den anderen Bereichen der Folienbahn, aus der die Verpackung hergestellt wird, ist die Temperatur beispielsweise höher. Auch in dem Siegelwerkzeug lassen sich durch die diskreten Heizmittel gewünschte Temperaturprofile erzielen. Durch die Höhe der Temperatur im Bereich des Siegelrahmens, der im Kontakt mit der Folienbahn steht und der die eigentliche Siegelnaht erzeugt, lassen sich unterschiedlich feste Siegelnähte erzielen, wobei in der Regel eine höhere Temperatur in einer festeren Siegelnaht resultiert. Der Rest des Siegelwerkzeugs wird vorzugsweise weniger stark erwärmt als der Bereich des Siegelrahmens. Dies ist nicht nur energiesparend sondern auch beispielsweise vorteilhaft bei der Verarbeitung von schrumpffähigen Folien, die in dem Siegelwerkzeug nicht oder nur wenig schrumpfen sollen.

Vorzugsweise sind die Heizmittel mit unterschiedlicher Bespannung betreibbar, so dass die einzelnen Heizmittel nicht nur an- und ausschaltbar sind, sondern auch jeweils mit einer unterschiedlichen Heizleistung betrieben werden können.

Ganz besonders bevorzugt weist das Heizmittel Temperatursensoren, beispielsweise Thermoelemente auf, mit dem lokal die Temperatur des Heizmittels gemessen werden kann. In einer besonders bevorzugten Ausführungsform der erfindungsgemäßen Verpackungsmaschine wird das Signal dieser Temperatursensoren dazu verwendet, die elektrische Spannung an einem oder mehreren Heizmitteln zu regeln.

Weiterhin bevorzugt weist die erfindungsgemäße Verpackungsmaschine Mittel auf, um den Wärmeübergang zwischen Folienbahn und Heizmittel zu verbessern. Diese Mittel können beispielsweise Vakuumkanäle sein, mit denen die Folie an das Heizelement angesaugt wird. Eine weitere Möglichkeit besteht darin die Folie mit Druck gegen das Heizmittel zu drücken.

In einer weiteren bevorzugten Ausführungsform weist das Heizelement Mittel zur lokalen Kühlung auf. Diese Ausführungsform der erfindungsgemäßen Verpackungsmaschinen ist insbesondere dann von Vorteil, wenn die Heizplatte Bereiche aufweisen soll, die nicht oder nur sehr geringfügig erwärmt sein sollen, die aber durch die in der Heizplatte gegebene Wärmeleitung trotzdem erwärmt werden.

Vorzugsweise wird die Heizmittel von einem Computer gesteuert. Mit diesem Computer kann festgelegt werden, welches Heizelement mit Spannung beaufschlagt wird und wie hoch diese Spannung ist. Damit kann die Verteilung der Heizleistung frei programmier und gespeichert werden. Für jedes Packungsformat, das auf der erfindungsgemäßen Verpackungsmaschine hergestellt wird, kann somit eine optimale Temperaturverteilung hinterlegt und bedarfsweise abgerufen werden. Diese Temperaturverteilung kann auch noch von dem jeweils zu verarbeitenden Folientyp abhängen. Besonders bevorzugt weisen das Teifzieh- und/oder das Siegelwerkzeug eine Identifikation, beispielsweise einen Barcode oder einen Transponder auf. Sobald diese Identifikation in den Computer eingeben oder automatisch eingelesen wurde, wird automatisch das gewünschte Temperaturprofil abgerufen und die Heizmittel jeweils entsprechend angesteuert.

Im Folgenden wird die Erfindung anhand der Figuren 1 bis 5 erläutert. Diese Erläuterungen sind lediglich beispielhaft und schränken den allgemeinen Erfindungsgedanken nicht ein.
**Figur 1** zeigt schematisch die erfindungsgemäße Verpackungsmaschine.
**Figur 2** zeigt das Heizelement der Verpackungsmaschine.
**Figur 3** zeigt eine Betriebsform des Heizelementes der Verpackungsmaschine.
**Figur 4** zeigt eine weitere Betriebsform des Heizelementes der Verpackungsmaschine.
**Figur 5** zeigt eine Betriebsform des Siegelwerkzeuges der Verpackungsmaschine.

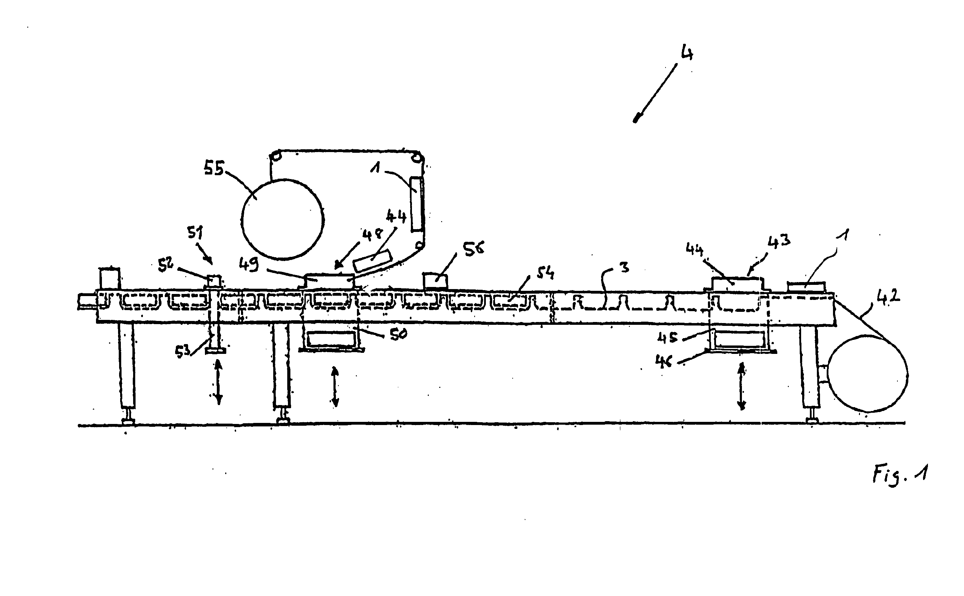

**Figur 1** zeigt eine schematische Darstellung einer möglichen Ausführungsform der erfindungsgemäßen Verpackungsmaschine. Eine Unterfolie 42 wird von einer Rolle abgerollt und zunächst mit einem Heizelement 1 erwärmt. Nachfolgend wird die Unterfolie in einer Formstation 43 tiefgezogen. Diese Formstation 43 weist ein Oberwerkzeug 44 und ein Unterwerkzeug 45, das auf einer Auflage 46 angeordnet ist, auf. Wie durch den Doppelpfeil dargestellt, ist die Auflage 46 und damit das Unterwerkzeug 45 vertikal verschiebbar. Sobald die Verpackungsmulden 3 in die Unterfolienbahn 42 eingeformt sind, werden sie mit dem Verpackungsgut 54 befüllt. Anschließend bevor die Verpackungsmulden in die Siegelstation 48 gelangen, werden mittels einer Stanze 56 Löcher in die Unterfolie gestanzt, die für den Gasaustausch in der Verpackung innerhalb der Siegelstation benötigt werden. In der Siegelstation 48 wird eine Oberfolie 55 auf die Unterfolie 42 gesiegelt und somit die Verpackungen geschlossen. In dem vorliegenden Fall wird auch die Oberfolie mittels eines Heizelementes 1 aufgewärmt und sodann mittels des Tiefziehwerkzeuges 44 tiefgezogen. Diese Tiefziehung kann dazu dienen, einen gewölbten Deckel für die Verpackungen zur Verfügung zu stellen. Die Tiefziehung kann jedoch auch dazu dienen die Oberfolie schrumpffähig zu machen. Auch die Siegelstation weist ein Oberwerkzeug 49 und ein Unterwerkzeug 50 auf, die beim Siegeln gegeneinander gepresst werden. In dem Oberwerkzeug 49 befindet sich ein Siegelrahmen, der ebenfalls mittels eines Heizelementes beheizt wird. Die nunmehr geschlossenen Verpackungen werden abschließend in einer Schneidstation 51 vereinzelt. Die Querschneidung der Schneidstation weist ebenfalls ein Oberwerkzeug 52 und ein Unterwerkzeug 53 auf, wobei das Unterwerkzeug 53 wiederum vertikal verschiebbar ist.

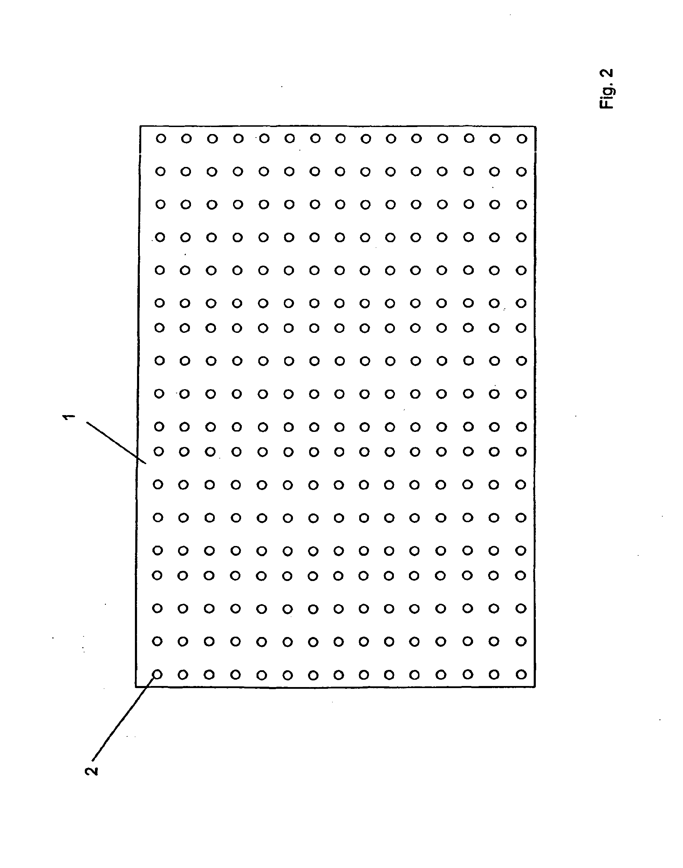

**Figur 2** zeigt ein Heizelement 1, das zur Erwärmung der Unter- und der Oberfolie herangezogen werden kann bzw. das sich auch in den Siegelwerkzeugen 49, 50 der Siegelstation 48 befinden kann. Dieses Heizelement weist eine Vielzahl von Heizmitteln 2 auf, die in einem ganz bestimmten gleichmäßigen oder ungleichmäßigen, vorzugsweise gleichmäßigen, Muster angeordnet sind. Die Heizmittel 2 sind einzeln oder gruppenweise, vorzugsweise einzeln, von einem Steuerungselement ansteuerbar. Mit der Steuerung können die Heizmittel an- oder abgeschaltet werden bzw. kann ihre Heizleistung reguliert werden. Somit ist ein ganz bestimmtes Temperaturprofil in der jeweiligen Folie bzw. bei dem Siegelvorgang erzielbar. Im Falle eines Formatwechsels, das heißt, wenn andere Verpackungen hergestellt werden sollen, kann mittels der Steuerung der Verpackungsmaschine eine andere gewünschte Temperaturverteilung eingestellt werden. In diesem Fall werden dann andere oder zusätzliche Heizmittel angesteuert oder mit einer unterschiedlichen Heizleistung betrieben. Diese Ausführungsform der vorliegenden Erfindung hat den Vorteil, dass das Heizmittel einfach auf das jeweils herzustellende Format angepasst werden kann. In einer vorteilhaften Ausführungsform der vorliegenden Erfindung weist das jeweilige Tiefzieh- oder Siegelwerkzeug einen Transponder auf, der ein bestimmtes Signal an die Steuerungseinheit sendet. Sobald die Steuerungseinheit dieses Signal empfängt, steuert sie die jeweiligen Heizmittel automatisch so an, dass die für das jeweilige Werkzeug optimale Temperaturverteilung in der Folienbahn 42, 45 oder beim Siegeln erzielt wird. Dieses Temperaturprofil kann auch von der verwendeten Folie abhängen, so dass gegebenenfalls der Betreiber der erfindungsgemäßen Verpackungsmaschine noch den Folientyp an die Steuerung der Verpackungsmaschine übermitteln muss.

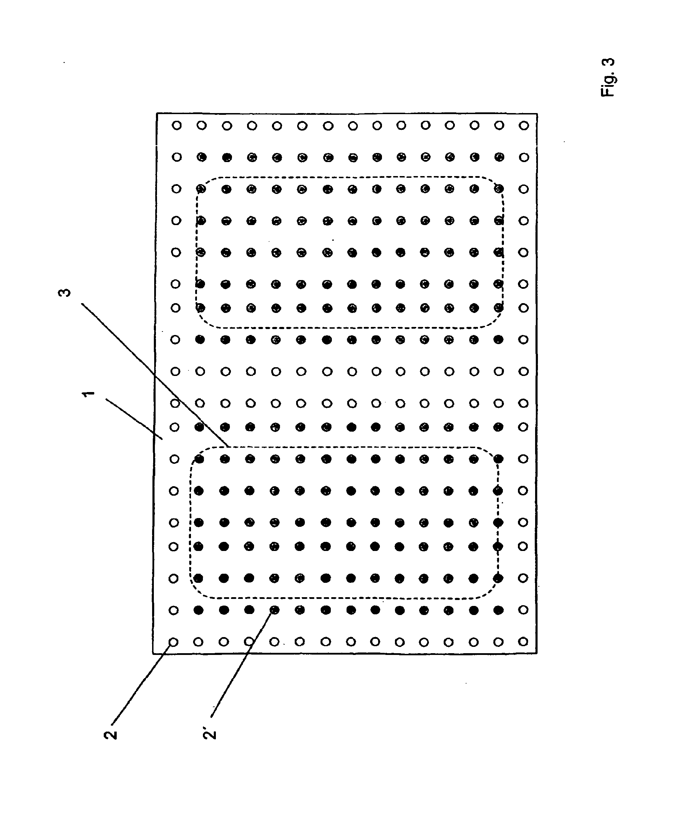

**Figur 3** zeigt gestrichelt die Umrisse einer herzustellenden Verpackungsmulde. Aufgrund der Form dieser Verpackungsmulde werden beispielsweise in dem vorliegenden Fall die grau hinterlegten Heizmittel 2'betrieben, während die anderen Heizmittel 2 eine geringere Temperatur aufweisen. Die Intensität mit der die jeweiligen Heizmittel hängt von der gewünschten Temperaturverteilung in der Folie ab.

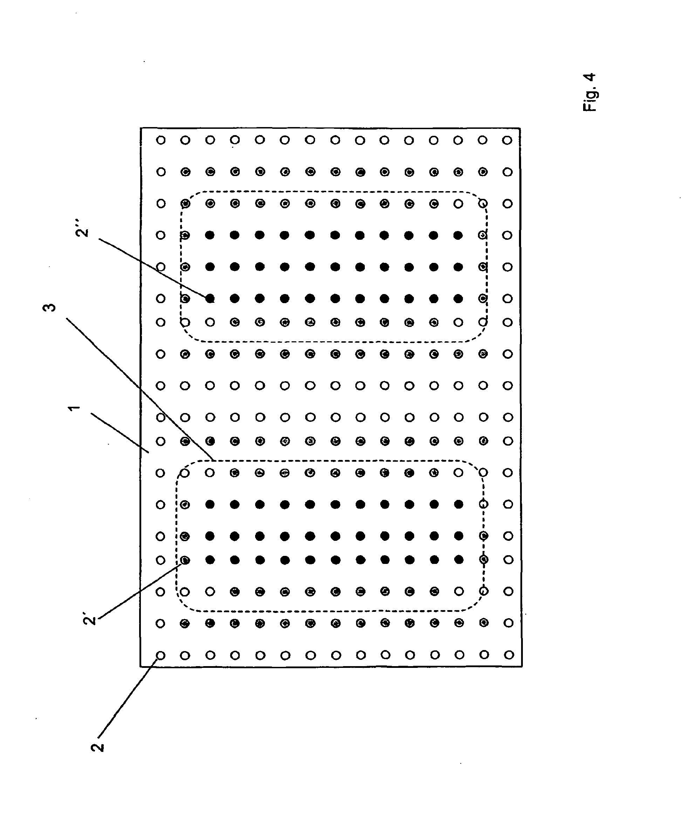

**Figur 4** zeigt einen anderen Betriebszustand der Heizplatte der erfindungsgemäßen Verpackungsvorrichtung. In dem vorliegenden Fall weist die Heizplatte auch noch schwarze hinterlegte Heizmittel 2" auf, die eine höhere Temperatur signalisieren sollen als die grau hinterlegten Heizmittel. In dem vorliegenden Fall ist es vorteilhaft insbesondere die Folienabschnitte, die die Ecke einer Verpackung bilden nur sehr schwach aufzuwärmen, um ein zu starkes Fließen zu verhindern. Die einmal gefundene optimale Temperaturverteilung in der Heizplatte und die dazugehörige Ansteuerung der Heizmittel 2 wird abgespeichert und kann manuell oder automatisch abgerufen werden. Dadurch reduzieren sich Umrüstzeiten erheblich.

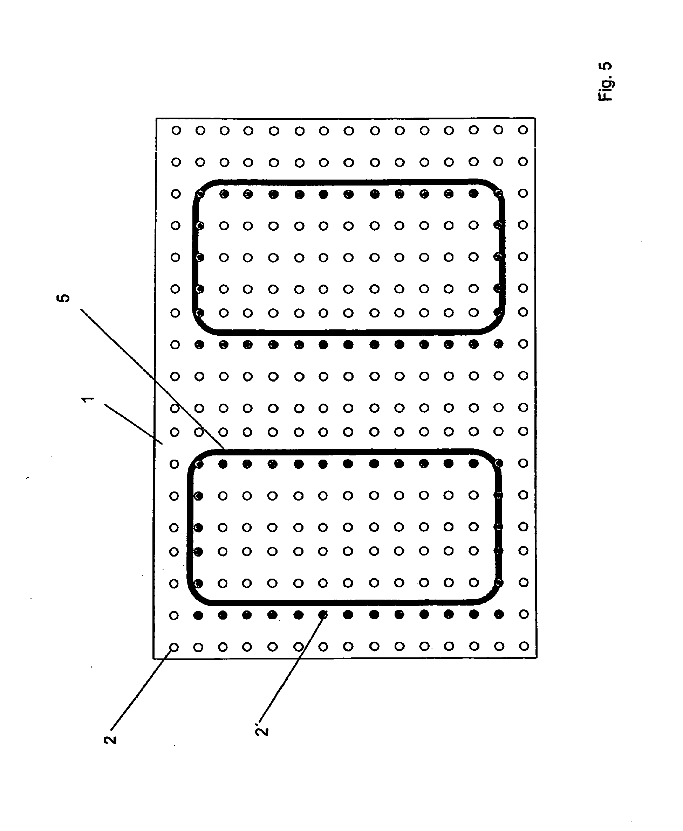

**Figur 5** zeigt das Heizmittel eines Siegelwerkzeugs. Der Siegelrahmen hat das Bezugzeichen 5 und ist nicht Bestandteil der Heizplatte 1 sondern vor dieser angeordnet. Der Siegelrahmen stellt ein Werkzeug dar, das an das jeweils zu produzierende Verpackungsformat angepasst ist. Auch hier kann der Siegelrahmen einen Transponder oder ein anderes Identifikationsmedium aufweisen, der/das die oben beschriebene Funktion erfüllt. Es ist zu erkennen, das in diesem Fall nur die grau hinterlegten Heizpatronen 2', die sich im Bereich des Siegelrahmens befinden, beheizt werden, während die anderen Heizpatronen abgeschaltet sind. Diese Ausführungsform ist energiesparend und insbesondere dann von Vorteil, wenn als Unter- oder Oberfolie schrumpffähige Folien verwendet werden, die beim Siegeln nicht schrumpfen sollen.

### Bezugszeichenliste

- 1: Heizelement
- 2, 2', 2": Heizmittel, Heizpatrone
- 3: Verpackungsmulde
- 4: Verpackungsmaschine
- 5: Siegelrahmen
- 42: Unterfolienbahn
- 43: Formstation
- 44: Oberwerkzeug der Formstation
- 45: Unterwerkzeug der Formstation
- 46: Auflage des Unterwerkzeuges der Formstation
- 48: Siegelstation
- 49: Oberwerkzeug der Siegelstation
- 50: Unterwerkzeug der Siegelstation
- 51: Schneidstation
- 52: Oberwerkzeug der Schneidstation
- 53: Unterwerkzeug der Schneidstation
- 54: Verpackungsgut
- 55: Oberfolie
- 56: Stanzen

## Patentansprüche

1. Verpackungsmaschine (4) mit einer Formstation (43), die Mulden (3) in eine Folienbahn (42, 55) einformt, wobei ein Heizelement (1) die Folienbahn (42) vor dem Verformen erwärmt, wobei das Heizelement eine Vielzahl von diskreten Heizmitteln (2, 2', 2") aufweist, die einzeln oder gruppenweise ansteuerbar sind, **dadurch gekennzeichnet, dass** die Heizmittel (2, 2', 2") so angesteuert sind, dass sie ein ganz bestimmtes den jeweiligen Tiefziehanforderungen entsprechendes Temperaturprofil in der Folienbahn erzeugen.

2. Verpackungsmaschine nach Anspruch 1, **dadurch gekennzeichnet, dass** sie ein Siegelwerkzeug (49, 50) aufweist, mit dem eine Oberfolie (55) an die Verpackungsmulde gesiegelbar ist, wobei das Siegelwerkzeug (49, 50) ein Heizelement (1) zu dessen Erwärmung aufweist, wobei das Heizelement (1) eine Vielzahl von diskreten Heizmitteln (2, 2', 2") aufweist, die einzeln oder gruppenweise ansteuerbar sind.

3. Verpackungsmaschine nach einem der voranstehenden Ansprüche, **dadurch gekennzeichnet, dass** die Heizmittel (2, 2', 2") mit unterschiedlicher Spannung betreibbar sind.

4. Verpackungsmaschine nach einem der voranstehenden Ansprüche, **dadurch gekennzeichnet, dass** das Heizelement (1) mindestens einen Temperatursensor aufweist, dessen Signal zur Steuerung eines oder mehrerer Heizmittel (2, 2', 2") dient.

5. Verpackungsmaschine nach einem der voranstehenden Ansprüche, **dadurch gekennzeichnet, dass** sie Mittel aufweist, um die Wärmeübertragung zwischen Folienbahn (42) und Heizelement (1) zu verbessern.

6. Verpackungsmaschine nach einem der voranstehenden Ansprüche, **dadurch gekennzeichnet, dass** das Heizelement (1) Mittel zur lokalen Kühlung aufweist.

## Claims

1. Packaging machine (4) with a forming station (43), which forms the troughs (3) in a foil web (42, 55), wherein a heating element heats the foil web (42) before deforming it, wherein the heating element (1) has a plurality of discrete heating means (2, 2', 2"), which are controllable individually or as a group, **characterised in that** the heating means (2, 2', 2") are so controlled that they produce a very specific temperature profile in the foil web corresponding to the respective deep-drawing requirements.

2. Packaging machine in accordance with claim 1, **characterised in that** it has a sealing tool (49, 50), with which an upper web (55) can be sealed to the packaging trough, wherein the sealing tool (49, 50) has a heating element (1) to heat it, wherein the heating element (1) has a plurality of discrete heating means (2, 2', 2"), which can be controlled individually or as a group.

3. Packaging machine in accordance with one of the preceding claims, **characterised in that** the heating means (2, 2', 2") can be operated with different voltage.

4. Packaging machine in accordance with one of the preceding claims, **characterised in that** the heating element (1) has at least one temperature sensor, whose signal is used for control of one or a plurality of heating means (2, 2', 2").

5. Packaging machine in accordance with one of the preceding claims, **characterised in that** it has means to improve the heat transfer between foil web (42) and heating element (1).

6. Packaging machine in accordance with one of the preceding claims, **characterised in that** the heating element (1) has means for local cooling.

## Revendications

1. Machine à emballer (4) comportant une station de formage (43) qui forme des alvéoles (3) dans une bande de film (42, 55), dans laquelle un élément chauffant (1) chauffe la bande de film (42) avant sa déformation, l'élément chauffant présentant une multitude de moyens chauffants discontinus (2, 2', 2") qui peuvent être commandés individuellement ou par groupes, **caractérisée en ce que** les éléments chauffants (2, 2', 2") sont commandés de manière à établir un profil de température tout à fait défini correspondant aux prescriptions d'emboutissage respectives.

2. Machine à emballer selon la revendication 1, **caractérisée en ce qu'**elle présente un outil de scellement (49, 50) à l'aide duquel un film supérieur (55) peut être scellé sur l'alvéole d'emballage, l'outil de scellement (49, 50) présentant un élément chauffant (1) pour le réchauffer, l'élément chauffant (1) présentant une multitude de moyens chauffants discontinus (2, 2', 2") qui peuvent être commandés individuellement ou par groupes.

3. Machine à emballer selon une des revendications précédentes, **caractérisée en ce que** les moyens chauffants (2, 2', 2") peuvent fonctionner avec une tension différente.

4. Machine à emballer selon une des revendications précédentes, **caractérisée en ce que** , l'élément chauffant (1) présente au moins un capteur de température dont le signal sert à commander un ou plusieurs moyens chauffants (2, 2', 2").

5. Machine à emballer selon une des revendications précédentes, **caractérisée en ce qu'**elle présente des moyens pour améliorer la transmission thermique entre la bande de film (42) et l'élément chauffant (1).

6. Machine à emballer selon une des revendications précédentes, **caractérisée en ce que** l'élément chauffant (1) présente des moyens de refroidissement local.
